Europäisches Patentamt

European Patent Office

Office européen des brevets

(11) Veröffentlichungsnummer: **0 050 740**
**B1**

(12) **EUROPÄISCHE PATENTSCHRIFT**

(45) Veröffentlichungstag der Patentschrift: **07.08.85**

(21) Anmeldenummer: **81107521.7**

(22) Anmeldetag: **22.09.81**

(51) Int. Cl.⁴: **H 01 M 2/14,** H 01 M 2/18

(54) **Akkumulator mit Abstandhalter für formstabile Elektrodenplatten.**

(30) Priorität: **23.10.80 DE 3040019**

(43) Veröffentlichungstag der Anmeldung:
**05.05.82 Patentblatt 82/18**

(45) Bekanntmachung des Hinweises auf die
Patenterteilung:
**07.08.85 Patentblatt 85/32**

(84) Benannte Vertragsstaaten:
**AT FR GB IT SE**

(56) Entgegenhaltungen:
**AT-B- 365 374**
**GB-A- 27 399**

(73) Patentinhaber: **ACCUMULATORENFABRIK
SONNENSCHEIN GMBH
Thiergarten Postfach 1180
D-6470 Büdingen 1 Oberhessen (DE)**

(72) Erfinder: **Wiedersum, Gerhard
Nussgraben 21
D-6470 Büdingen 1 (DE)**

(74) Vertreter: **Baumann, Eduard, Dipl.-Phys.
Postfach 1201 Sattlerstrasse 1
D-8011 Höhenkirchen/München (DE)**

**Beschreibung**

Die Erfindung bezieht sich auf einen Akkumulator nach dem Oberbegriff des Anspruches 1.

Im allgemeinen werden Abstandhalter zwischen den Elektrodenplatten angeordnet und müssen porös sein, damit der Elektrolyt möglichst frei beweglich und ohne in der Funktion beeinträchtigt zu sein, zwischen gegenüberliegenden Elektrodenplatten wandern kann. Dies macht Abstandhalter oder Separatoren erforderlich, die möglichst porös und dennoch mechanisch stabil sein müssen. Der Herstellungsaufwand ist sehr hoch, dennoch ist die Lebensdauer beschränkt. Darüberhinaus ist es praktisch unvermeidlich, daß die Funktion des Elektrolyten, nämlich die freie Ionenbeweglichkeit, in gewissem Maße beeinträchtigt wird.

Bei geringen Plattenabständen von etwa 1 bis 4 mm ist es in Hinblick auf eine gewisse Flexibilität und mechanische Instabilität sowie eine gewisse variable Elektrodenplattendicke aufgrund des elektrochemischen Prozesses bei der Aufladung und Entladung von Bleiakkumulatoren erforderlich, derartige Abstandhalter zwischen den Elektrodenplatten anzubringen, um einen Kurzschluß zu verhindern.

Für bestimmte Einsatzzwecke, beispielsweise für eine besonders lange Wartungsfreiheit, Lebensdauer und für besonders hohe Umweltbelastung durch extreme Temperaturunterschiede une extreme Schwankungen der Luftfeuchtigkeit, ist es allerdings erforderlich, Akkumulatoren mit größeren Plattenabständen zu machen. Da bei derartigen Akkumulatoren die Dicke der Elektrodenplatten nicht so sehr ins Gewicht fällt, können derartige Elektrodenplatte dicker und damit formstabiler ausgebildet werden. Durch den größeren Abstand ist auch keine Kurzschlußgefahr mehr gegeben.

Fur Akkumulatoren mit größeren Elektrodenplattenabständen sind poröse Abstandhalter zu teuer und beeinträchtigen darüberhinaus die Funktionsweise des Elektrolyten nachteilig. Bisher wurden daher einfache Zwischenstücke aus elektrisch isolierendem Material zwischen den Platten angeordnet. Für jede Zelle war eine ganze Anzahl derartiger Platten erforderlich, die verhältnismäßig aufwendig in der Herstellung und in der Montage waren.

Der Erfindung liegt die Aufgabe zugrunde, einen Abstandhalter für formstabile Elektrodenplatten von Akkumulatoren so auszubilden, daß er einfacher und billiger in der Herstellung und in der Montage ist und dennoch zuverlässig funktioniert.

Die Aufgabe wird erfindungsgemäß durch die Merkmale des Kennzeichens des Anspruches 1 gelöst. Weitere Ausbildungen der Erfindung sind in den Unteransprüche dargestellt.

Gemäß der Erfindung besteht der Abstandhalter a) aus einer elektrisch isolierenden Folie, in welche in vorbestimmten Abständen untereinander angeordnete Vorsprünge angeordnet sind, deren seitliche Ausdehnung den Abständen benachbarter Elektrodenplatten entspricht, wobei b) in jeder Akkumulatorzelle an gegenüberliegenden Zelleninnenwänden eine Folie derart angeordnet ist, daß die Seitenkanten der zugehörigen Elektrodenplatten zwischen den Vorsprüngen angeordnet werden können.

Diese Vorsprünge können beliebige Form aufweisen, sie können vorzugsweise kastenförmig sein, sie können jedoch auch zylinderförmig oder kegelförmig ausgebildet sein. Die Vorsprünge können auch die Form von (von oben nach unten) durchgehenden Rippen aufweisen, zwischen welchen die einzelnen Elektrodenplatten eingeschoben werden können.

Als Material für die Vorsprünge kann Polyvinylchlorid oder vorzugsweise Polyäthylen mit einer Wandstärke von etwa 0,5 mm verwendet werden. Die Vorsprünge können auf die ebene Folie aufgeklebt oder vorzugsweise im Tiefziehverfahren hergestellt bzw. eingeprägt werden.

Durch der Erfindungsgegenstand ist es möglich, daß in jede Akkumulatorzelle lediglich zwei Folien, welche Vorsprünge aufweisen, hineingestellt werden, zwischen denen die Elektrodenplatten eingeschoben werden können.

Derartige Separatoren oder Abstandhalter bestehen aus sehr preiswertem Material, die Herstellung ist denkbar einfach; das Gleiche gilt für die Montage, bei der lediglich zwei derartige Abstandhalter gegenüber in das Gehäuse hineingestellt werden und dazwischen die Elektrodenplatten angeordnet werden. Die Funktionsweise des Elektrolyten wird überhaupt nicht beeinträchtigt, der Ionenaustausch kann ungehindert vonstatten gehen.

Ausführungsbeispiele der Erfindung sind in der Zeichnung dargestellt. Es zeigt:

Fig. 1 eine schematische Darstellung eines Abstandhalters mit drei untereinander angeordneten Reihen von Vorsprüngen,

Fig. 2 eine schematische räumliche Darstellung von drei Elektrodenplatten und zwei gegenüberliegenden Abstandhaltern,

Fig. 3 eine zylinderförmige Ausbildung von Vorsprüngen auf einem Abstandhalter,

Fig. 4 eine kegelförmige Ausbildung der Vorsprünge auf einem Abstandhalter,

Fig. 5 eine rippenförmige Ausbildung der Vorsprünge auf einem Abstandhalter.

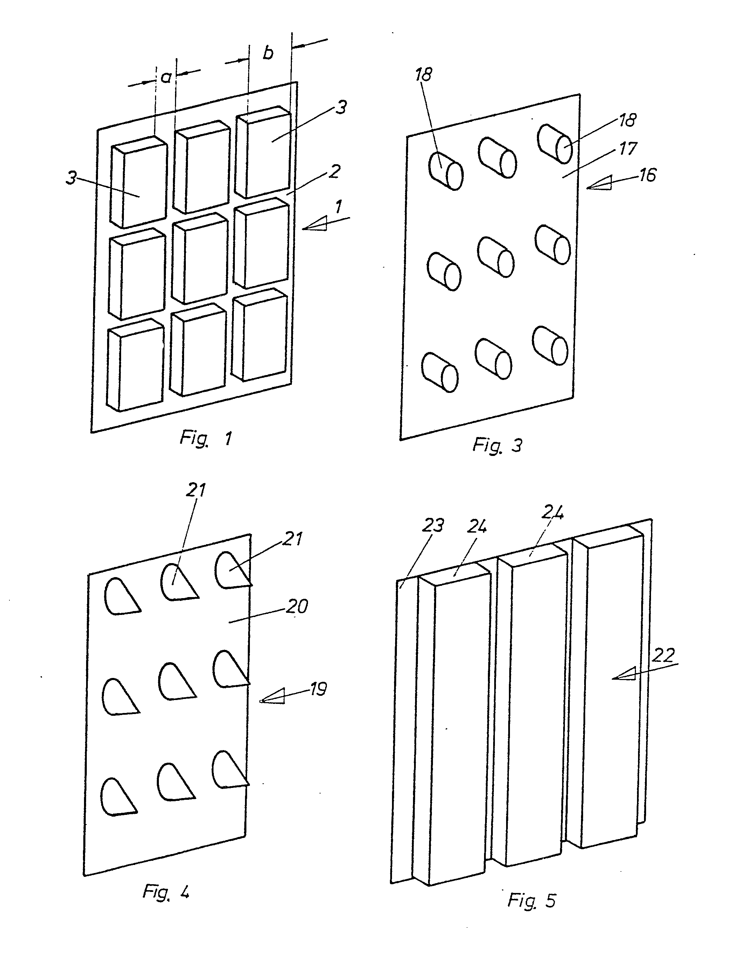

In Fig. 1 est ein Abstandhalter 1, dargestellt, der aus einer Folie 2 und kastenförmigen Vorsprüngen 3 besteht, die vorzugsweise im Tiefziehverfahren aus Polyäthylen hergestellt sind, jedoch auch aufgeklebt oder auf andere Weise mit einer flachen Folie verbunden werden können. Zwischen zwei kastenförmigen Vorsprüngen 3 besteht ein Abstand a, der der Dicke der Elektrodengitter entspricht. Die Breite der Vorsprünge 3 beträgt b; sie entspricht dem Abstand zweier benachbarter Elektrodengitter. Die Höhe der Vorsprünge 3 kann beliebig sein, sie kann im Extremfall die ganze Höhe der Akkumulatorzelle ausfüllen, wobei man dann von rippenförmigen Vorsprüngen spricht (s. dazu Fig. 5). Derartige rippenförmige Vorsprünge haben allerdings den gewissen Nachteil, daß der Elektrolyt um die Kanten der Elektrodenplatten herum nicht so frei beweglich ist (was allerdings auch nicht unbedingt notwendig ist).

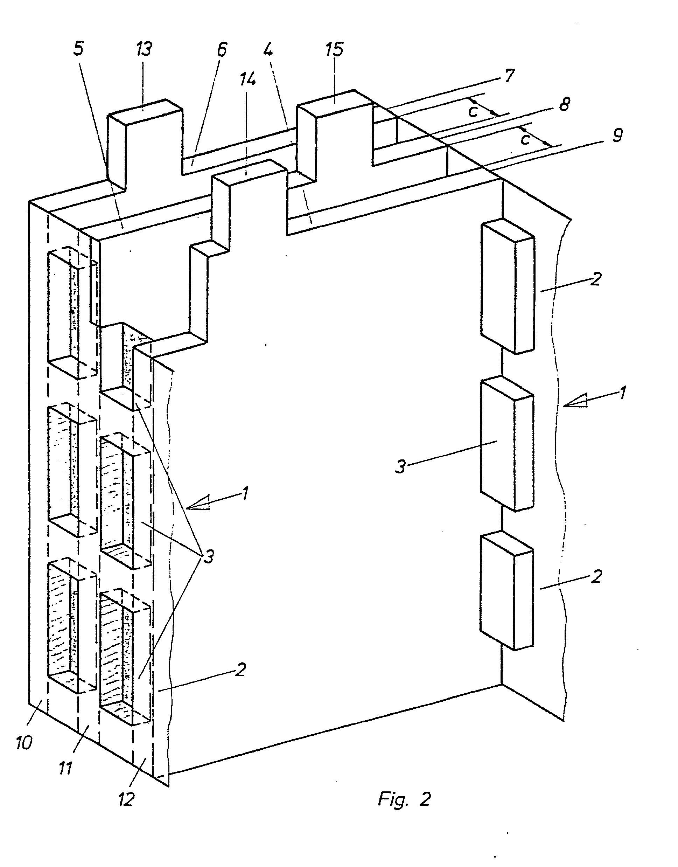

Fig. 2 zeigt eine räumliche schematische Darstellung von drei benachbarten Elektrodenplatten 4, 5 und 6, zwischen denen zwei sich gegenüberliegende Abstandhalter 1 vorgesehen sind, die jeweils aus einer Folie 2 und bevorzugten tiefgezogenen kastenförmigen Vorsprüngen 3 bestehen, wobei jeweils drei längliche Vorsprünge 3 untereinander angeordnet sind. Die Seitenkanten der Elektrodengitter 4, 5 und 6, mit denen die Vorsprünge 3 in Berührung stehen, sind mit 7, 8 und 9 bezeichnet. Gegenüberliegende Seitenkanten sind mit 10, 11 und 12 bezeichnet. Nach oben ragen sogenannte Fahnen 13 und 14, die den Strom von gleichen Elektrodengittern durch eine gemeinsame (nicht gezeigte) Verbindungsleitung nach außen abführen, sowie zwischen den Fahnen 13 und 14 eine Fahne 15, die mit der entgegengesetzt gepolten Elektrodenplatte 5 in Berührung steht.

In Fig. 3 ist eine anderes Ausführungsbeispiel eines Abstandhalters 16 dargestellt, bestehend aus einer Folie 17 und zylinderförmigen Vorsprüngen 18.

In Fig. 4 ist ein weiteres Ausführungsbeispiel eines Abstandhalters 19 dargestellt, bestehend aus einer Folie 20 und kegelförmig ausgebildeten Vorsprüngen 21.

In Fig. 5 ist ein Abstandhalter 22 dargestellt, bestehend aus einer Folie 23 und senkrechten Rippen 24.

## Patentansprüche

1. Akkumulator mit Abstandhalter für formstabile Elektrodenplatten, und mit Abständen der Elektrodenplatten von mindestens 5 mm, dadurch gekennzeichnet,

a) daß der Abstandhalter (1) aus einer elektrisch isolierenden Folie (2) besteht, in welche in vorbestimmten Abständen (a) untereinander angeordnete Vorsprünge (3) angeordnet sind, deren seitliche Ausdehnung (b) den Abständen (c) benachbarter Elektrodenplatten (4, 5, 6) entspricht,

b) daß in jeder Akkumulatorzelle an gegenüberliegenden Zelleninnenwänden je eine Folie derart angeordnet ist, daß die Seitkanten (7 bis 12) der zugehörigen Elektrodenplatten (4, 5, 6) zwischen den Vorsprüngen (3) angeordnet ist.

2. Akkumulator nach Anspruch 1, dadurch gekennzeichnet, daß er eine Bleiakkumlator ist.

3. Akkumulator nach Anspruch 1 oder 2, dadurch gekennzeichnet, daß die Abstände der Elektroplatten 10 bis 20 mm betragen.

4. Akkumulator nach einem der Ansprüche 1 bis 3, dadurch gekennzeichnet, daß die Vorsprünge (3) kastenförmig zylinderförmig oder kegelförmig ausgebildet sind.

5. Akkumulator nach einem der Ansprüche 1 bis 3, dadurch gekennzeichnet, daß die Vorsprünge (3) in Form von durchgehenden Rippen ausgebildet sind.

6. Akkumulator nach einem der Ansprüche 1 bis 5, dadurch gekennzeichnet, daß als Material für die Vorsprünge (3) Polyvinylchlorid oder Polyäthylen mit einer Wandstärke von etwa 0,5 mm verwendet wird.

7. Akkumulator nach einem der Ansprüche 1 bis 6, dadurch gekennzeichnet, daß die Vorsprünge (3) auf einer ebenen Folie aufgeklebt sind.

8. Akkumulator nach einem der Anspruch 1 bid 6, dadurch gekennzeichnet, daß die Vorsprünge (3) aus thermoplastischem Material bestehen und im Tiefziehverfahren hergestellt sind.

9. Akkumulator nach Anspruch 8, dadurch gekennzeichnet, daß das thermoplastische Material Polyvinylchlorid oder Polyäthylen ist.

## Revendications

1. Accumulateur avec séparateur de plaques-électrodes de forme stable ayant entre elles un écart d'au moins 5 mm, caractérisé en ce que

a) le séparateur (1) est constitué par une feuille électriquement isolante (2) sur laquelle sont disposés l'une au-dessous de l'autre en écarts prédéterminés (a) des saillies (3) dont la largeur (b) correspond à l'écart (c) entre deux plaques-électrodes voisines (4, 5, 6),

(b) chaque élément d'accumulateur est muni, sur deux parois intérieures opposées l'une à l'autre, de deux de ces feuilles de telle sorte que les arêtes latérales (7 à 12) des plaques-électrodes (4, 5, 6) peuvent être disposées entre les saillies (3) correspondantes.

2. Accumulateur selon la revendication 1, caractérisé en ce que il est du type à plomb.

3. Accumulateur selon la revendication 1 ou 2, caractérisé en ce que les écarts entre les plaques-électrodes sont de 10 à 20 mm.

4. Accumulateur selon l'une des revendications 1 à 3, caractérisé en ce que les saillies (3) ont la forme de parallélépipèdes rectangles, de cylindres ou de cônes.

5. Accumulateur selon l'une des revendications 1 à 3, caractérisé en ce que les saillies (3) ont la forme de nervures continues.

6. Accumulateur selon l'une des revendications 1 à 5, caractérisé en ce que les saillies (3) sont réalisées en chlorure de polyvinyle ou en polyéthylène avec une épaisseur de paroi d'environ 0,5 mm.

7. Accumulateur selon l'une des revendications 1 à 6, caractérisé en ce que les saillies (3) sont collées sur une feuille plane.

8. Accumulateur selon l'une des revendications 1 à 6, caractérisé en ce que les saillies (3) sont en matériau thermoplastique et sont fabriquées suivant le procédé d'emboutissage profond.

9. Accumulateur selon la revendication 8, caractérise en ce que le matériau thermoplastique est le chlorure de polyvinyle ou le polyéthylène.

## Claims

1. A storage battery comprising a spacer member for dimensionally stable electrode plates, the electrode plates being spaced by at least 5 mm, characterised in

(a) that the spacer member (1) is an electrically insulating sheet (2) having projections (3) provided therein beneath one another at predetermined distances (a), the lateral extension (b) of said projections corresponding to the distances (c) between adjacent electrode plates (4, 5, 6),

(b) that a respective sheet is disposed in each storage battery cell on opposite inner cell walls such that the side edges (7 to 12) of the associated electrode plates may be arranged between the projections (3).

2. A storage battery as claimed in claim 1, characterised by being a lead storage battery.

3. A storage battery as claimed in claim 1 or claim 2, characterised in that the distances between the electrode plates are 10 to 20 mm.

4. A storage battery as claimed in any of the claims 1 to 3, characterised in that the projections (3) are of box-like, cylindrical or conical design.

5. A storage battery cell as claimed in any of the claims 1 to 3, characterised in that the projections (3) are configured as continuous ribs.

6. A storage battery cell as claimed in any of the claims 1 to 5, characterised in that the material used for the projections (3) is polyvinyl chloride or polyethylene having a wall thickness of about 0.5 mm.

7. A storage battery cell as claimed in any of the claims 1 to 6, characterised in that the projections (3) are cemented onto a planar sheet.

8. A storage battery cell as claimed in any of the claims 1 to 6, characterised in that the projections (3) are made of thermoplastic material and produced by deep-drawing.

9. A storage battery cell as claimed in claim 8, characterised in that the thermoplastic material is polyvinyl chloride or polyethylene.

0 050 740

Fig. 1

Fig. 3

Fig. 4

Fig. 5

1

Fig. 2